# EUROPEAN PATENT APPLICATION

(11) **EP 2 602 698 A1**
(43) Date of publication of application: **12.06.2013**
(21) Application number: 12007100.6
(22) Date of filing: 12.10.2012
(51) Int. Cl.: G06F 3/044

(54) **Touch panel**

(30) Priority: 05.12.2011 US 201161567057 P
(71) Applicant: HTC Corporation, Taoyuan County 330 (TW)
(72) Inventor: Lo, Pi-Lin, 300 Taoyan City, Taoyan County (TW); Chen, Te-Mu, 300 Taoyan City, Taoyan County (TW); Hsueh, Yi-Fan, 300 Taoyan City, Taoyan County (TW); Lin, Yen-Cheng, 300 Taoyan City, Taoyan County (TW)
(74) Representative: Emde, Eric

(57) **Abstract**

A touch panel including a first substrate, a plurality of driving lines, and a plurality of sensing lines is provided. The driving lines are respectively extended along a first direction. Each driving line includes a plurality of first pads and a plurality of first interconnecting portions. Any adjacent two first pads are connected through a first interconnecting portion, and the width of each first interconnecting portion is smaller than the width of each first pad. The sensing lines are respectively extended along a second direction. The second direction intersects the first direction. The vertical projection of any one of the sensing lines on the first substrate intersects a first interconnecting portion of each driving line to form an overlapped area, and the length of the overlapped area in the second direction is smaller than or equal to the length of the overlapped area in the first direction.

## Description

### CROSS-REFERENCE TO RELATED APPLICATION

This application claims the priority benefits of U.S. provisional application serial no. 61/567,057, filed on December 05, 2011. The entirety of the above-mentioned patent applications is hereby incorporated by reference herein and made a part of this specification.

### BACKGROUND

### 1. Field of the Invention

The application generally relates to a touch panel, and more particularly, to a capacitive touch panel.

### 2. Description of Related Art

In recent years, along with the rapid advancement and wide application of information technologies, wireless mobile communications, and information appliances, the conventional input devices (for example, keyboards and mouses) of many information products have been replaced by touch panels in order to offer convenience, small volume, light weight, and intuitional experiences to the users.

Touch panels can be categorized into resistive touch panels, capacitive touch panels, optical touch panels, acoustic wave touch panels, and electromagnetic touch panels according to the adopted touch-sensing techniques. Compared to other types of touch panels, capacitive touch panel offers quick response, high reliability, and high definition therefore is broadly applied to various handheld electronic devices.

In a capacitive touch panel, a plurality of driving lines and a plurality of sensing lines are intersected to form a sensing array, so that a surface sensing effect can be achieved. When a user touches the touch panel with a finger, the touch panel determines the position touched by the finger according to capacitance variation on the sensing array. However, in an existing capacitive touch panel, obvious parasitic capacitances are produced at where the driving lines are intersected with the sensing lines. Thus, a touch position may not be correctly determined. As a result, the sensing sensitivity is reduced.

Conventionally, the distances between the intersected driving lines and sensing lines are usually increased (i.e., the thickness of an insulation material between the driving lines and the sensing lines is increased) in order to reduce the impact of the parasitic capacitances. However, such a technique increases the fabrication cost and the thickness of the touch panel and reduces the transmittance of the touch panel.

### SUMMARY

Accordingly, the application is directed to a touch panel, in which the parasitic capacitance between driving lines and sensing lines is reduced and accordingly an optimal sensing sensitivity is achieved.

The application is directed to a touch panel, in which due to the decrease of parasitic capacitance, the amount of insulation material applied between driving lines and sensing lines is reduced and accordingly the fabrication cost is reduced.

The application is directed to a touch panel, in which due to the decrease of parasitic capacitance, the thickness of the touch panel is reduced and an optimal transmittance is achieved.

The application provides a touch panel including a first substrate, a plurality of driving lines, and a plurality of sensing lines. The driving lines are arranged on a first surface of the first substrate in parallel and are respectively extended along a first direction. Each of the driving lines includes a plurality of first pads and a plurality of first interconnecting portions. Any adjacent two first pads are connected with each other through a first interconnecting portion, and the width of each first interconnecting portion is smaller than the width of each first pad. The sensing lines are arranged on the first substrate in parallel and are respectively extended along a second direction. The second direction intersects the first direction. The sensing lines are electrically insulated from the driving lines. The vertical projection of any sensing line on the first surface intersects a first interconnecting portion of each driving line to form an overlapped area, and the length of the overlapped area in the second direction is smaller than or equal to the length of the overlapped area in the first direction.

These and other exemplary embodiments, features, aspects, and advantages of the application will be described and become more apparent from the detailed description of exemplary embodiments when read in conjunction with accompanying drawings.

### BRIEF DESCRIPTION OF THE DRAWINGS

The accompanying drawings are included to provide a further understanding of the application, and are incorporated in and constitute a part of this specification. The drawings illustrate embodiments of the application and, together with the description, serve to explain the principles of the application.

FIG. 1 illustrates a touch panel according to an embodiment of the application.

FIG. 2 is a partial enlarged view of a driving line and a sensing line in FIG. 1.

FIG. 3 is a partial enlarged view of a driving line and a sensing line according to another embodiment of the application.

FIG. 4 is a partial enlarged view of a driving line and a sensing line according to yet another embodiment of the application.

FIGs. 5A-5C illustrate several possible cross-sectional structures of a touch panel provided by the application.

FIG. 6 illustrates a touch panel according to another embodiment of the application.

FIG. 7 is a partial enlarged view of a driving line and a sensing line in FIG. 6.

### DESCRIPTION OF THE EMBODIMENTS

Reference will now be made in detail to the present preferred embodiments of the application, examples of which are illustrated in the accompanying drawings. Wherever possible, the same reference numbers are used in the drawings and the description to refer to the same or like parts.

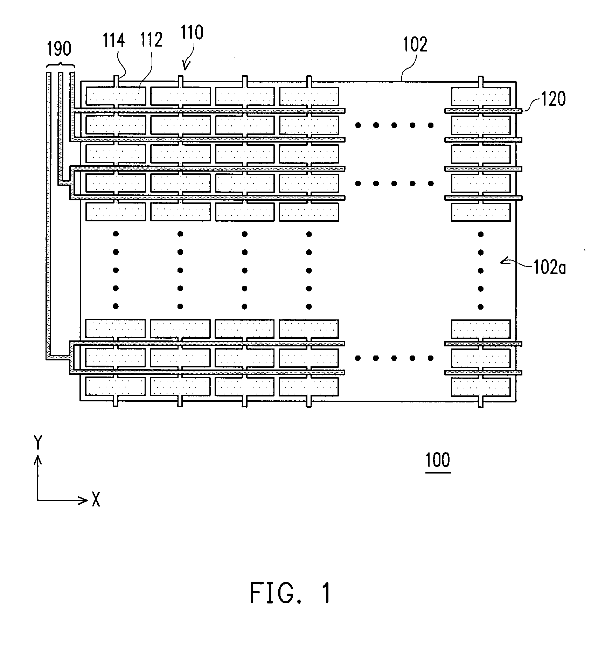

FIG. 1 illustrates a touch panel according to an embodiment of the application. For the convenience of description, some films or elements are omitted in FIG. 1.

As shown in FIG. 1, the touch panel 100 includes a first substrate 102, a plurality of driving lines 110, and a plurality of sensing lines 120. The driving lines 110 are arranged on the first surface 102a of the first substrate 102 in parallel and are respectively extended along a direction Y. Each driving line 110 includes a plurality of first pads 112 and a plurality of first interconnecting portions 114. Any adjacent two first pads 112 are connected with each other through a first interconnecting portion 114. The sensing lines 120 are electrically insulated from the driving lines 110. Besides, the sensing lines 120 are arranged on the first substrate 102 in parallel and are respectively extended along a direction X. In other words, a sensing array is formed on the first substrate 102 by the intersecting driving lines 110 and sensing lines 120. In the present embodiment, the driving lines 110 and the sensing lines 120 may be made of a transparent conductive material, such as ITO or IZO.

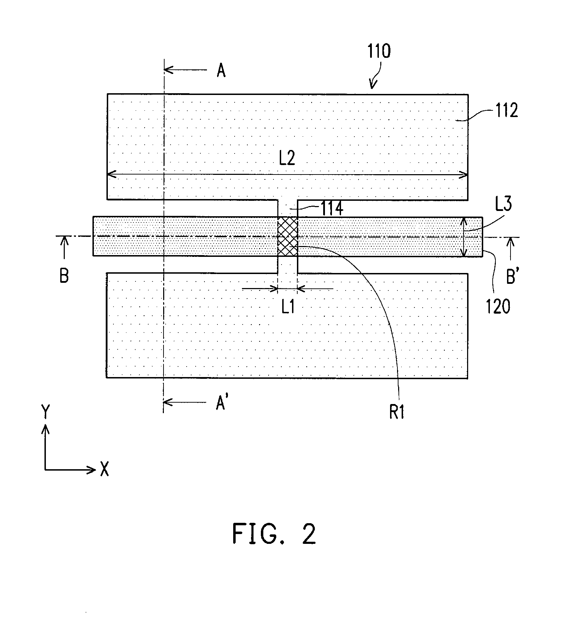

FIG. 2 is a partial enlarged view of a driving line and a sensing line in FIG. 1. As shown in FIG. 2, because the driving lines 110 and the sensing lines 120 intersect each other, the vertical projection of any sensing line 120 on the first surface 102a forms an overlapped area R1 with a first interconnecting portion 114 of the corresponding driving line 110.

In the present embodiment, the parasitic capacitance produced in the overlapped area R1 is reduced by reducing the size of the overlapped area R1.

First, in the present embodiment, the width L1 of each first interconnecting portion 114 is reduced to make it smaller than the width L2 of each first pad 112. Herein the width L1 of each first interconnecting portion 114 is considered the length of the first interconnecting portion 114 in the direction X, and the width L2 of each first pad 112 is considered the length of the first pad 112 in the direction X. Accordingly, when the width L1 of a first interconnecting portion 114 is reduced, the size of the overlapped area R1 formed by a sensing line 120 and the first interconnecting portion 114 is also reduced, so that the parasitic capacitance produced at where a driving line 110 intersects the sensing line 120 can be reduced.

Additionally, the relationship between the width L1 of the first interconnecting portion 114 and the width L3 of the sensing line 120 within the overlapped area R1 is further considered in the present embodiment. The width L1 of the first interconnecting portion 114 is smaller than or equal to the width L3 of the sensing line 120. Herein the width L3 of the sensing line 120 is the length of the sensing line 120 in the direction Y. In other words, the overlapped area R1 formed by the sensing line 120 and the first interconnecting portion 114 on the first surface 102a has a length L3 along the direction Y and a length L1 along the direction X, and L1 ≦ L3.

In the present embodiment, any adjacent two first pads 112 may be connected with each other through one, two, or more first interconnecting portions 114.

Additionally, referring to FIG. 1 again, a plurality of connecting lines 190 may be further disposed at the edges of the touch panel 100 for connecting the driving lines 110 and the sensing lines 120, so as to transmit sensing signals. In the present embodiment, every adjacent two sensing lines 120 are connected to the same connecting line 190. In other words, in the present embodiment, a single sensing area is corresponded to two, three, or more sensing lines 120 so that the width of each sensing line 120 can be reduced. However, in other embodiments, each sensing line 120 may also be connected to a single connecting line 190.

As described above, in the present embodiment, by reducing the size of the overlapped area R1 between each driving line 110 and each sensing line 120, the parasitic capacitance produced between the driving line 110 and the sensing line 120 is reduced, so that an optimal sensing sensitivity is achieved.

Electrical characteristics (for example, the parasitic capacitance between the driving lines and the sensing lines and the resistance of the driving lines) of the touch panel 100 may also be adjusted by changing the shape of the overlapped areas R1 between the driving lines 110 and the sensing lines 120.

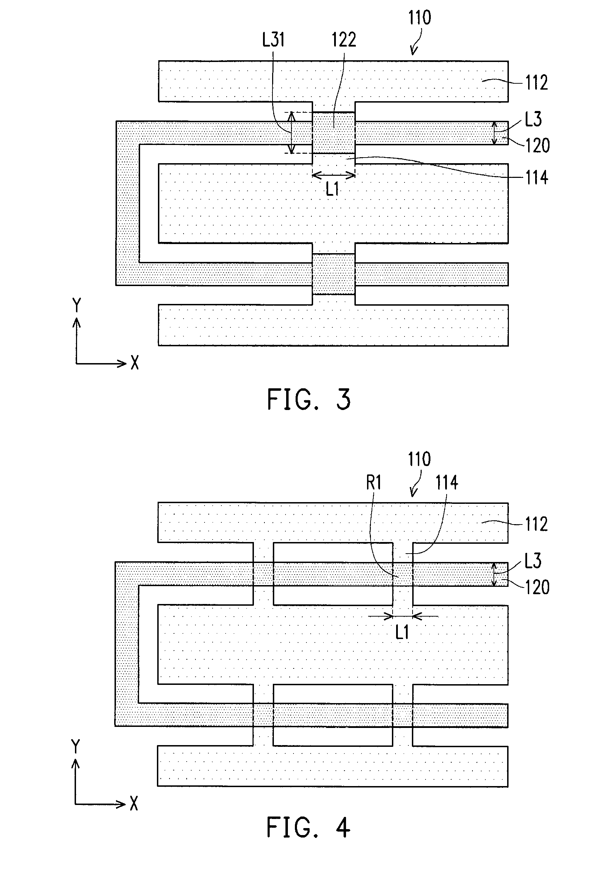

FIG. 3 is a partial enlarged view of a driving line and a sensing line according to another embodiment of the application. As shown in FIG. 3, even though the width L1 of the first interconnecting portion 114 is greater than the width L3 of the sensing line 120, the width L31 of a first portion 126 of the sensing line 120 within the overlapped area R1 can be increased to make the width L31 of the first portion 126 to be greater than or equal to the width L1 of the first interconnecting portion 114. In other words, the overlapped area R1 formed by the first portion 126 of the sensing line 120 and the first interconnecting portion 114 on the first surface 102a has a length L31 along the direction Y and a length L1 along the direction X, and L1 ≦ L31.

FIG. 4 is a partial enlarged view of a driving line and a sensing line according to yet another embodiment of the application. As shown in FIG. 4, any adjacent two first pads 112 are connected with each other through two first interconnecting portions 114, and the width L1 of each first interconnecting portion 114 is equal to the width L3 of the sensing line 120. Thus, the overlapped area R1 formed by the sensing line 120 and the first interconnecting portions 114 on the first surface 102a is square. In other words, the overlapped area R1 has a length L3 along direction Y and a length L1 along direction X, and L1 ≦ L31.

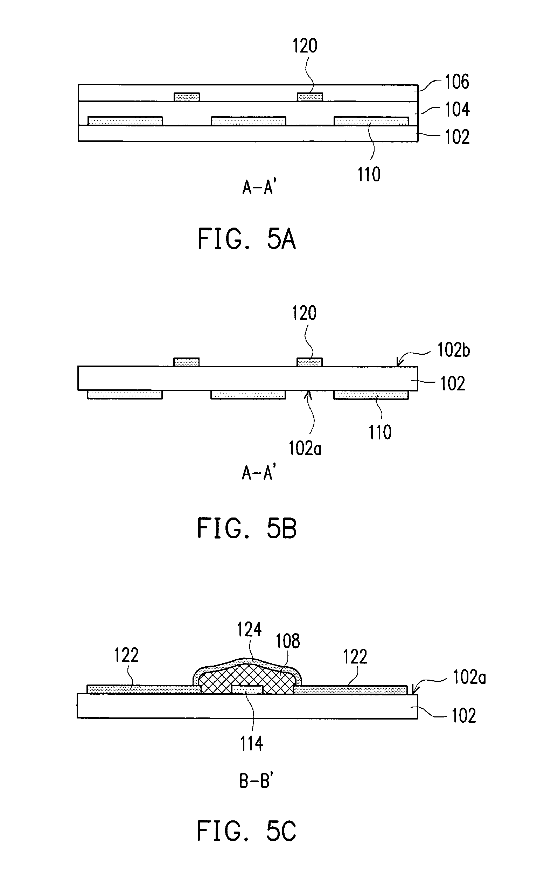

The design principle described above can be applied to different types of capacitive touch panels. Below, several possible cross-sectional structures of the touch panel 100 will be described with reference to FIGs. 5A-5C.

FIG. 5A illustrates a possible cross-sectional structure of the touch panel 100 along line A-A' in FIG. 2. As shown in FIG. 2 and FIG. 5A, the driving lines 110 are disposed on the first substrate 102. The sensing lines 120 are disposed on a second substrate 104. The second substrate 104 is disposed on the first substrate 102 to cover the driving lines 110. In other words, the driving lines 110 and the sensing lines 120 are respectively located at two opposite sides of the second substrate 104. In addition, a passivation layer 106 may be further disposed on the second substrate 104 for protecting the sensing lines 120. Regarding the fabrication process, for example, the driving lines 110 and the sensing lines 120 are respectively disposed on the first substrate 102 and the second substrate first. Then, the first substrate 102 and the second substrate 104 are bonded together, and the passivation layer is disposed on the second substrate 104. In the present embodiment, the first substrate 102 and the second substrate 104 may be bonded together by using an optically clear adhesive (OCA). The first substrate 102 and the second substrate 104 are transparent substrates, such as glass substrates or polyethylene terephthalate (PET) substrates.

In the present embodiment, the parasitic capacitance between the driving lines 110 and the sensing lines 120 is reduced by reducing the size of the overlapped areas R1 between the driving lines 110 and the sensing lines 120. The distance between the driving lines 110 and the sensing lines 120 (i.e., the thickness of the second substrate 104) can be appropriately reduced without affecting the performance of the touch chip. Thus, the amount of material for fabricating the second substrate 104, and accordingly the fabrication cost of the touch panel 100, is reduced. Besides, the overall thickness of the touch panel 100 is reduced, and an optimal transmittance is achieved.

FIG. 5B illustrates another possible cross-sectional structure of the touch panel 100 along line A-A' in FIG. 2. As shown in FIG. 2 and FIG. 5B, the first substrate 102 has a first surface 102a and an opposite second surface 102b. The driving lines 110 are disposed on the first surface 102a, and the sensing lines 120 are disposed on the second surface 102b. Regarding the fabrication process, the driving lines 110 and the sensing lines 120 may be respectively fabricated on two opposite sides of the first substrate 102. The first substrate 102 is a transparent substrate, such as a glass substrate or a PET substrate.

Similarly, in the present embodiment, the parasitic capacitance between the driving lines 110 and the sensing lines 120 is reduced by reducing the size of the overlapped areas R1 between the driving lines 110 and the sensing lines 120. The distance between the driving lines 110 and the sensing lines 120 (i.e., the thickness of the first substrate 102) can be appropriately reduced without affecting the performance of the touch chip. Thus, the amount of material for fabricating the first substrate 102, and accordingly the fabrication cost of the touch panel 100, is reduced. Besides, the overall thickness of the touch panel 100 is reduced, and an optimal transmittance is achieved.

FIG. 5C illustrates yet another possible cross-sectional structure of the touch panel 100 along line B-B' in FIG. 2. As shown in FIG. 2 and FIG. 5C, the driving lines 110 and the sensing lines 120 are disposed on the same plane except at where the driving lines 110 intersect the sensing lines 120. To be specific, each sensing line 120 includes a plurality of second pads 122 and second interconnecting portions 124 respectively connected between every adjacent two second pads 122. Each second interconnecting portion 124 is disposed above the corresponding first interconnecting portion 114 to form the overlapped area R1. The second pads 122 and the driving lines 110 are all disposed on the first surface 102a of the first substrate 102. Additionally, an insulation material 108 is disposed between the second interconnecting portions 124 and the first interconnecting portions 114 for separating the second interconnecting portions 124 and the first interconnecting portions 114. The first substrate 102 is a transparent substrate, such as a glass substrate or a PET substrate. In the present embodiment, the sensing lines 120 span over the driving lines 110 at where they intersect each other. However, in other embodiments, it may also be that the driving lines 110 spanning over the sensing lines 120 at where they intersect each other. In other words, the second interconnecting portions 124 are disposed between the first interconnecting portions 114 and the first substrate 102.

Similarly, in the present embodiment, the parasitic capacitance between the driving lines 110 and the sensing lines 120 is reduced by reducing the size of the overlapped areas R1 between the driving lines 110 and the sensing lines 120. The distance between the driving lines 110 and the sensing lines 120 can be shortened without affecting the performance of the touch chip. Thus, the overall thickness of the touch panel 100 is reduced, and an optimal transmittance is achieved.

Even though several possible structures of the touch panel provided by the application have been described above, the application is not limited thereto. For example, the shapes and layouts of the driving lines and the sensing lines are not limited to those described in foregoing embodiments.

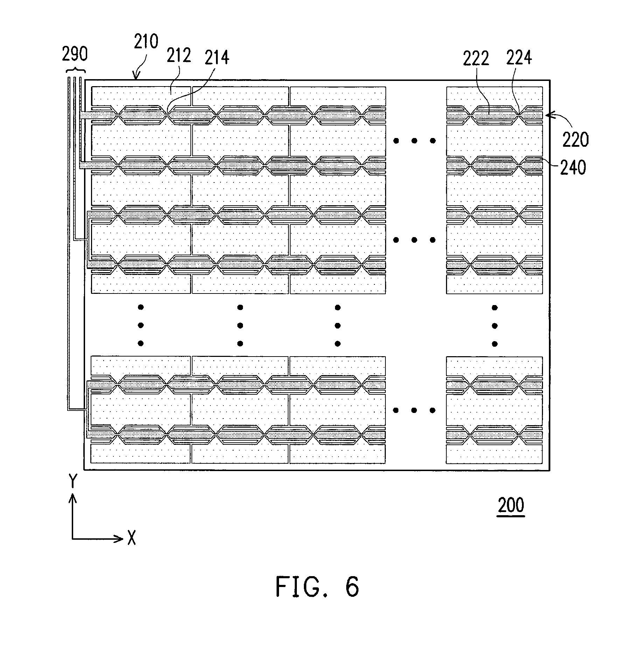

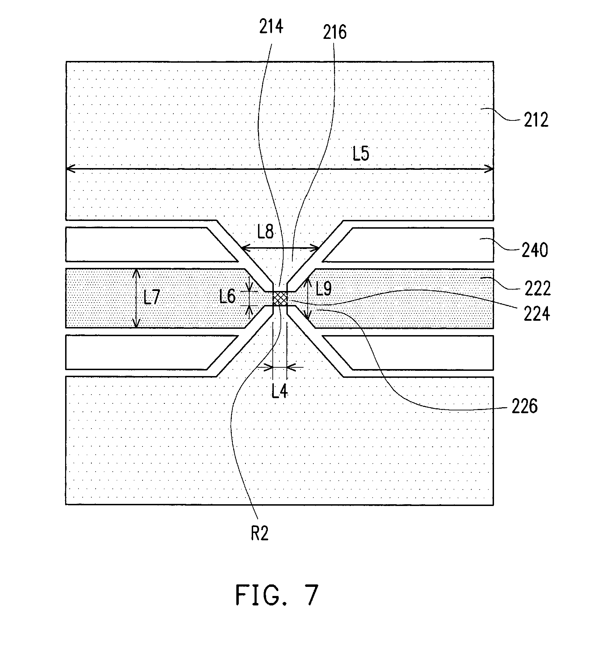

FIG. 6 illustrates a touch panel according to another embodiment of the application. For the convenience of description, some elements and aspects understandable based on the embodiments described above are omitted in FIG. 6. FIG. 7 is a partial enlarged view of a driving line and a sensing line in FIG. 6.

As shown in FIG. 6 and FIG. 7, the touch panel 200 includes a plurality of driving lines 210 and a plurality of sensing lines 220. The driving lines 210 are respectively extended along the direction Y, and each driving line 210 includes a plurality of first pads 212 and a plurality of first interconnecting portions 214. Any adjacent two first pads 212 are connected with each other through two first interconnecting portions 214. The sensing lines 220 are respectively extended along the direction X, and each sensing line 220 includes a plurality of second pads 222 and a plurality of second interconnecting portions 224. Any adjacent two second pads 222 are connected with each other through one second interconnecting portion 224. In the present embodiment, the driving lines 210 and the sensing lines 220 are disposed on the same plane. In other embodiments, any adjacent two first pads 212 may also be connected with each other through one or more than two first interconnecting portions 214.

In the present embodiment, the first pads 212, the first interconnecting portions 214, and the second pads 222 are coplanar, and each second interconnecting portion 224 is disposed above the corresponding first interconnecting portion 214 to form an overlapped area R2 (as shown in FIG. 7). Similarly, in other embodiments, the driving lines 210 may also span over the sensing lines 220 at where they intersect each other. In other words, each first interconnecting portion 214 is disposed above the corresponding second interconnecting portion 224.

In the present embodiment, the parasitic capacitance produced in the overlapped areas R2 can be reduced by reducing the size of the overlapped areas R2. The width L4 of each first interconnecting portion 214 is smaller than the width L5 of each first pad 212, and the width L6 of each second interconnecting portion 224 is smaller than the width L7 of each second pad 222. Since both the width L4 of each first interconnecting portion 214 and the width L6 of each second interconnecting portion 224 are reduced, the size of the overlapped area R2 formed by the first interconnecting portion 214 and the second interconnecting portion 224 is also reduced. Accordingly, the parasitic capacitance produced at where the first interconnecting portion 214 intersects the second interconnecting portion 224 is also reduced.

Additionally, in the present embodiment, the relationship between the width L4 of the first interconnecting portion 214 and the width L6 of the second interconnecting portion 224 within the overlapped area R2 is further taken into consideration. Herein the width L4 of the first interconnecting portion 214 is smaller than or equal to the width L6 of the second interconnecting portion 224. In other words, the overlapped area R2 formed by the first interconnecting portion 214 and the second interconnecting portion 224 respectively has a length L6 along the direction Y and a length L4 along the direction X, and L4 ≦ L6.

Additionally, referring to FIG. 6 again, a plurality of connecting lines 290 are further disposed at the edges of the touch panel 200 for connecting the driving lines 210 and the sensing lines 220, so as to transmit sensing signals. In the present embodiment, every adjacent two sensing lines 220 are connected to the same connecting line 290. In other words, in the present embodiment, a single sensing area is corresponded to two or more sensing lines 220 so that the width of each sensing line 220 can be reduced. However, in other embodiments, each sensing line 220 may also be connected to a single connecting line 290.

As described above, in the present embodiment, by reducing the size of the overlapped area R2 between each driving line 210 and each sensing line 220, the parasitic capacitance between the driving line 210 and the sensing line 220 is reduced, so that an optimal sensing sensitivity is achieved.

Similarly, regarding the cross-sectional structure in the present embodiment, the parasitic capacitance produced in the overlapped areas R2 is reduced by reducing the distance between the driving lines 210 and the sensing lines 220. Besides, the thickness of the touch panel 200 is reduced and an optimal transmittance is achieved.

To be specific, when the intersection area between a driving line 210 and a sensing line 220 is too large, a user can easily see the intersection, and accordingly the transmittance uniformity of the touch panel 200 is affected. Thus, in the present embodiment, the shapes of the driving lines 210 and the sensing lines 220 at where they intersect each other are specially designed to improve the transmittance uniformity of the touch panel 200. As shown in FIG. 6 and FIG. 7, each driving line 210 further includes two first side portions 216. The two first side portions 216 are respectively disposed at two opposite sides of the first interconnecting portion 214 and connected between the first interconnecting portion 214 and the first pads 212 at both sides. Besides, the width L8 of each first side portion 216 progressively decreases from the corresponding first pad 212 to the first interconnecting portion 214. Additionally, each sensing line 220 further includes two second side portions 226. The two second side portions 226 are respectively disposed at two opposite sides of the second interconnecting portion 224 and connected between the second interconnecting portion 224 and the second pads 222 at both sides. Besides, the width L9 of each second side portion 226 progressively decreases from the corresponding second pad 222 to the second interconnecting portion 224. The design of the first side portions 216 and the second side portions 226 reduces the intersection area between the driving lines 210 and the sensing lines 220 and accordingly improves the transmittance uniformity of the touch panel 200.

Additionally, as shown in FIG. 6 and FIG. 7, since there may be space between the driving line 210 and the sensing line 220, in the present embodiment, a plurality of dummy electrodes 240 is further disposed in the area excluding the driving lines 210 and the sensing lines 220, and the dummy electrodes 240 are electrically insulated from the driving lines 210 and the sensing lines 220. Thereby, the transmittance uniformity of the touch panel 200 is improved. However, similar dummy electrodes may also be disposed in the touch panel 100 in the embodiment illustrated in FIG. 1 (not shown) to locate the vertical projection of the dummy electrodes on the first surface 102a in an area excluding the vertical projections of the sensing lines 120 on the first surface 102a and the driving lines 110, which will not be described herein. Moreover, when the dummy electrodes are applied to the structure illustrated in FIG. 3A, the dummy electrodes and the driving lines 110 are coplanar.

It will be apparent to those skilled in the art that various modifications and variations can be made to the structure of the application without departing from the scope or spirit of the application. In view of the foregoing, it is intended that the application cover modifications and variations of this application provided they fall within the scope of the following claims and their equivalents.

## Claims

1. A touch panel, comprising:
a first substrate;
a plurality of driving lines, arranged on a first surface of the first substrate in parallel, and respectively extended along a first direction, wherein each of the driving lines comprises a plurality of first pads and a plurality of first interconnecting portions, any adjacent two of the first pads are connected through one of the first interconnecting portions, and a width of each of the first interconnecting portions is smaller than a width of each of the first pads; and
a plurality of sensing lines, arranged on the first substrate in parallel, and respectively extended along a second direction, wherein the second direction intersects the first direction, the sensing lines are electrically insulated from the driving lines, a vertical projection of any one of the sensing lines on the first surface intersects one of the first interconnecting portions of each of the driving lines to form an overlapped area, and a length of the overlapped area in the second direction is smaller than or equal to a length of the overlapped area in the first direction.

2. The touch panel according to claim 1 further comprising a second substrate disposed on the first surface of the first substrate, wherein the driving lines and the sensing lines are respectively located at two opposite sides of the second substrate.

3. The touch panel according to claim 1, wherein the first substrate further comprises a second surface opposite to the first surface, and the sensing lines are disposed on the second surface.

4. The touch panel according to claim 1, wherein each of the sensing lines comprises a plurality of second pads and a plurality of second interconnecting portions, any adjacent two of the second pads are connected through one of the second interconnecting portions, and the second interconnecting portions are respectively corresponded to the first interconnecting portions to form the overlapped areas.

5. The touch panel according to claim 4 further comprising an insulation material disposed between each of the second interconnecting portions and the corresponding first interconnecting portion.

6. The touch panel according to claim 4, wherein a width of each of the second interconnecting portions is smaller than a width of each of the second pads.

7. The touch panel according to claim 4, wherein the second pads and the driving lines are all disposed on the first surface.

8. The touch panel according to claim 7, wherein each of the driving lines further comprises two first side portions respectively located at two opposite sides of the first interconnecting portion, the first side portions connect the first pads at both sides of the first interconnecting portion, and a width of each of the first side portions progressively decreases from the corresponding first pad to the first interconnecting portion.

9. The touch panel according to claim 8, wherein each of the sensing lines further comprises two second side portions respectively located at two opposite sides of the second interconnecting portion, the second side portions connect the second pads at both sides of the second interconnecting portion, and a width of each of the second side portions progressively decreases from the corresponding second pad to the second interconnecting portion.

10. The touch panel according to claim 1 further comprising a plurality of connecting lines, wherein each of the connecting lines connects at least two of the sensing lines.

11. The touch panel according to claim 1 further comprising a plurality of dummy electrodes disposed on the first substrate, wherein a vertical projection of the dummy electrodes on the first surface is located in an area excluding the vertical projections of the sensing lines on the first surface and the driving lines, and the dummy electrodes are electrically insulated from the driving lines and the sensing lines.
